# EUROPÄISCHE PATENTANMELDUNG

(11) **EP 1 107 515 A2**
(43) Veröffentlichungstag der Anmeldung: **13.06.2001**
(21) Anmeldenummer: 00124929.1
(22) Anmeldetag: 15.11.2000
(51) Int. Cl.: H04L 12/28, H04L 1/16

(54) **Verfahren zur Änderung des Betriebssystems eines Telekommunikationsendgerätes**

(30) Priorität: 09.12.1999 DE 19959434
(71) Anmelder: SIEMENS AKTIENGESELLSCHAFT, 80333 München (DE)
(72) Erfinder: Kräutler, Gerald, 1110 Wien (AT); Mohammadzadeh, Farrokh, 1020 Wien (AT); Vizaei, Mohammad, 1220 Wien (AT)

(57) **Zusammenfassung**

Es wird ein Verfahren zur Änderung des Betriebssystems eines Telekommunikationsendgerätes angegeben, bei dem die Richtigkeit der Datenübertragung überprüft und die Datenübertragung im Fehlerfall wiederholt wird, wobei zwischen dem Telekommunikationsendgerät und der Datenverwaltungseinrichtung des Telekommunikationsnetzes eine neue Verbindung aufgebaut wird, sofern die erste Verbindung abgebrochen wurde. Mit dieser Methode wird die Anpassung des Betriebssystems eines Telekommunikationsendgerätes an sich schnell ändernde Anforderungen besonders gut erfüllt.

## Beschreibung

Die Erfindung betrifft ein Verfahren zur Übertragung von Daten in einem Telekommunikationsnetz, welche das in einem Telekommunikationsendgerät dieses Telekommunikationsnetzes ablaufende Betriebssystem zumindest teilweise umfassen, bei dem zwischen dem Telekommunikationsendgerät und einer Einrichtung dieses Telekommunikationsnetzes, welche diese Daten verwaltet, eine Verbindung aufgebaut wird und diese Daten an das Telekommunikationsendgerät übermittelt werden.

Um den gesteigerten und sich rasch ändernden Anforderungen an Telekommunikationsendgeräte nachkommen zu können, ist eine laufende Anpassung derselben nötig. Oftmals kann mit einer Abänderung oder gegebenenfalls auch mit einem vollständigen Austausch des in dem betreffenden Telekommunikationsendgerät ablaufenden Betriebssystems das Auslangen gefunden werden. Die Hardware bleibt in diesem Falle unverändert.

Um die dazu erforderliche Datenübertragung für den Benutzer eines Telekommunikationsendgerätes möglichst komfortabel zu gestalten, wurde von einigen Herstellern die Möglichkeit geschaffen, das bestehende Telekommunikationsnetz für diesen Datentransfer zu verwenden. Eine Änderung des Betriebssystems kann daher praktisch weltweit angefordert werden, sofern das Telekommunikationsendgerät dafür vorbereitet ist.

Trotz technischer Entwicklung kann eine ständige Verbindung zwischen dem Telekommunikationsendgerät und einer Einrichtung des Telekommunikationsnetzes, welche diese Daten verwaltet, für die Dauer der Datenübertragung nicht gewährleistet werden. Bekannte Verfahren bieten jedoch keine Mechanismen, die eine Unterbrechung der Verbindung berücksichtigen und dadurch auftretende Fehler bei der Datenübertragung korrigieren können. Ein Telekommunikationsendgerät, auf dem ein auf diese Weise verfälschtes Betriebssystem abläuft ist nicht mehr funktionstüchtig und muss nach dem gegenwärtigem Stand der Technik an den Hersteller übergeben werden. Dieser kann mittels entsprechender Einrichtungen das fehlerhafte Telekommunikationsendgerät wieder in den fabriksmäßigen Zustand überführen.

Dieser Prozess ist für den Benutzer des Telekommunikationsendgerätes mit großen Unannehmlichkeiten verbunden, da mit vergleichsweise langen Bearbeitungszeiten zu rechnen ist. Weiterhin muss das Telekommunikationsendgerät aufgrund der zunehmenden Zentralisierung der Hersteller über relativ weite Distanzen transportiert werden. Dies trägt damit indirekt zur Belastung der Verkehrswege und der Umwelt bei.

Der Erfindung liegt daher die Aufgabe zugrunde ein Verfahren zur Änderung des Betriebssystems eines Telekommunikationsendgerätes anzugeben, welches die angeführten Nachteile nicht aufweist.

Dies geschieht erfindungsgemäß mit einem Verfahren der eingangs erwähnten Art, bei dem die Richtigkeit der Datenübertragung überprüft und die Datenübertragung im Fehlerfall wiederholt wird, und bei dem zwischen dem Telekommunikationsendgerät und der Datenverwaltungseinrichtung des Telekommunikationsnetzes eine neue Verbindung aufgebaut wird, sofern die erste Verbindung abgebrochen wurde. Der wesentliche Vorteil dieser Erfindung liegt darin, dass selbst Fehler, die auf eine Unterbrechung einer Verbindung zurückzuführen sind, berücksichtigt und korrigiert werden können. Derartige Unterbrechungen sind nach dem gegenwärtigen Stand der Technik nicht gänzlich auszuschließen.

Durch die zunehmende Einbindung von Sprachdaten in die Computer-Datennetze ist eine Anwendung des erfindungsgemäßen Verfahrens überdies nicht nur bei klassischen Sprachnetzen möglich, sondern auch bei Telekommunikationsnetzen, die beispielsweise nach dem unter dem Begriff "Internet Protocol" bekannten Verfahren arbeiten.

Das Betriebssystem eines Telekommunikationsendgerätes umfasst neben den zu einem Rufaufbau nötigen Modulen, wie zum Beispiel Programme zur Verarbeitung von Kommunikationsprotokollen, auch über den eigentlichen Rufaufbau hinausgehende Funktionen, zu denen unter anderem die Unterdrückung der Rufnummer (CLIR), Anklopfen (CW) oder aber auch Rückruf im Besetztfall (CCBS) zählen.

Günstig ist es, wenn die Datenübertragung periodisch wiederkehrend ausgeführt wird, da auf diese Weise stets der aktuelle Stand des Betriebssystems in den Datenspeicher des Telekommunikationsendgerätes übertragen wird.

Eine vorteilhafte Ausgestaltung des erfindungsgemäßen Verfahrens sieht überdies vor, dass die Kontrolle der Datenübertragung mittels Bildung und Prüfung einer Prüfsumme erfolgt, die sich aus den übermittelten Daten ergibt. Dieses Vorgehen erzielt hohe Datensicherheit bei vertretbarem technischen Aufwand.

Besonders vorteilhaft ist es, wenn der Aufbau der Verbindung zwischen Telekommunikationsendgerät und Datenverwaltungseinrichtung mit Hilfe des im Telekommunikationsendgerät ablaufenden Betriebssystems gestartet wird. In diesem Falle kann dezentral entschieden werden, ob ein Verbindungsaufbau nötig ist, und dieser gegebenenfalls auch angefordert werden. In der Datenverwaltungseinrichtung selbst ist dagegen lediglich ein Minimum an technischem Aufwand nötig, um für die ordnungsgemäße Durchführung des Verfahrens Sorge zu tragen.

Vorteilhaft ist es ferner, wenn die Richtigkeit der Datenübertragung mit Hilfe des im Telekommunikationsendgerät ablaufenden Betriebssystems überprüft wird. Aufgrund der dezentralen Prüfung ergibt sich eine Entlastung sowohl für die Datenverwaltungseinrichtung selbst, als auch für das Telekommunikationsnetz, da in diesem Falle nur ein Minimum an Daten an das Telekommunikationsendgerät übertragen werden muss.

Eine besonders vorteilhafte Ausgestaltung der Erfindung sieht vor, dass nicht der gesamte Speicherbereich, der im Telekommunikationsgerät für das Betriebssystem vorgesehen ist, durch die Datenübertragung überschrieben wird. Grundlegende Bestandteile des Betriebssystems können auf diese Weise in geschützten Speicherbereichen des Telekommunikationsendgerätes verwaltet und so eine Verfälschung der entsprechenden Daten verhindert werden. Diese grundlegenden Bestandteile sind zum Beispiel jene Programme, die zur Prüfung der Datenübertragung notwendig sind.

Eine weitere besonders vorteilhafte Ausführung des erfindungsgemäßen Verfahrens sieht vor, dass vor der Datenübertragung eine Kopie von zumindest einem Teil des Betriebssystems des Telekommunikationsendgerätes angelegt und das durch die Datenübertragung veränderte Betriebssystem nur bei die Richtigkeit der Datenübertragung aktiviert wird. Auf diese Weise kann bei unkorrekter Datenübertragung verhindert werden, dass ein fehlerhaftes Betriebssystem im Telekommunikationsendgerät ausgeführt wird. Darüber hinaus kann auf eine korrekte, wenn auch nicht aktualisierte, Version des Betriebssystems zurückgegriffen und eine einwandfreie Funktion des Telekommunikationsendgerätes gewährleistet werden. Dieses vorteilhafte Vorgehen kann auch nur für grundlegende Bestandteile des Betriebssystems vorgesehen werden, um eine Mindestfunktionalität sichern zu können. Diese grundlegenden Bestandteile sind zum Beispiel jene Programme, die zur Prüfung der Datenübertragung notwendig sind.

Günstig ist es weiterhin, wenn die Datenverwaltungseinrichtung vom Telekommunikationsendgerät eine Rückmeldung über die Richtigkeit der Datenübertragung erwartet und im Fehlerfall die Datenübertragung nochmals startet. Im Telekommunikationsendgerät ist in diesem Falle nur ein Minimum an technischem Aufwand nötig, für eine gesicherte Datenübertragung zu sorgen. Die korrekten Daten werden bei Auftreten eines Fehlers abermals von der Datenverwaltungseinrichtung übertragen.

Eine weitere vorteilhafte Ausgestaltung sieht vor, dass die Datenverwaltungseinrichtung vom Telekommunikationsendgerät eine Rückmeldung über die Richtigkeit der Datenübertragung erwartet und bei Ausbleiben dieser Meldung nach einer vorgegebenen Zeit die Datenübertragung nochmals startet. Die Möglichkeit einer neuerlichen Datenübertragung ist in diesem Falle auch bei einer nahezu völligen Zerstörung des Betriebssystems gegeben.

Günstig ist es, wenn als Telekommunikationsendgerät ein ISDN-Telefon vorgesehen ist. Gerade diese Klasse von Geräten bietet aufgrund der technischen Gegebenheiten eine Vielzahl von Diensten, beziehungsweise die Möglichkeit solche einzuführen. Ein Verfahren zur Änderung des Betriebssystems ist für ISDN-Telefone daher besonders wünschenswert.

Günstig ist es weiterhin, wenn als Telekommunikationsendgerät ein Mobiltelefon vorgesehen ist. Noch mehr als bei ISDN-Telefonen wird, nach dem gegenwärtigem Stand, bei diesen Geräten die Funktion von sich rasch ändernden Anforderungen bestimmt. Umso mehr ist es daher notwendig, eine Möglichkeit zu schaffen, die dazu nötige Änderung des Betriebssystems weitgehend komplikationsfrei durchzuführen.

Die Erfindung wird anhand einer Figur näher erläutert, welche beispielhaft die Aufteilung des für das Betriebssystem des Telekommunikationsendgerätes vorgesehenen Speicherbereiches und die Zustände desselben während des Ladens eines anderen Betriebssystems zeigt.

Der vorgesehene Speicherbereich ist in 6 gleich große Speicherblöcke B1..B6 gegliedert. Im Auslieferungszustand sind die ersten bis dritten Speicherblöcke B1, B2, B3 mit den ersten bis dritten Programmteilen P1, P2, P3 belegt. Im vierten Speicherblock B4 befindet sich ein reservierter Speicher R. Der fünfte Speicherblock B5 beinhaltet einen für den Verbindungsaufbau nötigen Programmteil, ein Verbindungsprogramm VP. Im sechsten Speicherblock B6 befindet sich schließlich ein Boot-Programm BP. Diese Belegung des Speicherbereiches wird als erster Zustand Z1 bezeichnet.

Der beispielhafte Ablauf der Datenübertragung und der Änderung des Betriebssystems des Telekommunikationsendgerätes ist wie folgt.

Der Benutzer des Telekommunikationsendgerätes wählt die Zugangsnummer der Datenverwaltungseinrichtung und startet danach die Datenübertragung. Zu Beginn wird das Verbindungsprogramm VP vom sechsten Speicherblock B6 in den ersten Speicherblock Bl kopiert. Diese Belegung des Speicherbereiches wird als zweiter Zustand Z2 bezeichnet. In Folge wird ein zweiter neuer Programmteil NP2 in den zweiten Speicherblock B2, ein dritter neuer Programmteil NP3 in den dritten Speicherblock B3 und schließlich ein erster neuer Programmteil NP1 in den vierten Speicherblock B4 übertragen. Diese Speicherbelegung wird als dritter Zustand Z3 bezeichnet. Zuletzt wird der erste neue Programmteil NP1 in den ersten Speicherblock B1 kopiert. Die daraus resultierende Speicherbelegung wird mit einem vierten Zustand Z4 bezeichnet. Abschließend wird vom Benutzer des Telekommunikationsendgerätes ein Neustart des Betriebssystems eingeleitet. Der Programmablauf beginnt mit dem Boot-Programm BP, mittels dem durch Bildung und Vergleich einer Prüfsumme die Richtigkeit der neu geladenen Programmteile NP1, NP2, NP3 feststellt wird. Im positiven Fall wird die weitere Programmausführung beim ersten Speicherblock B1 und somit beim ersten neuen Programmteil NP1 fortgesetzt. Im Fehlerfall wird dagegen durch Bildung und Vergleich einer Prüfsumme die Richtigkeit des Verbindungsprogramms VP festgestellt. Bei positivem Ausgang dieser Prüfung wird das Verbindungsprogramm VP in den ersten Speicherblock B1 kopiert und die Programmausführung wiederum beim ersten Speicherblock B1 fortgesetzt. Diese Speicherbelegung entspricht dem dritten Zustand Z3. Sowohl im dritten Zustand Z3 als auch im zweiten Zustand Z2 wird mittels Boot-Programm BP also zum Verbindungsprogramm VP verzweigt. Dies hat einen neuerlichen Verbindungsaufbau zur Datenverwaltungseinrichtung und eine nochmalige Datenübertragung zu Folge. Der erläuterte Ablauf wird daher so lange wiederholt, bis eine korrekte Version der neuen Programmteile NP1, NP2, NP3 in den Speicher des Telekommunikationsendgerätes übermittelt wurde.

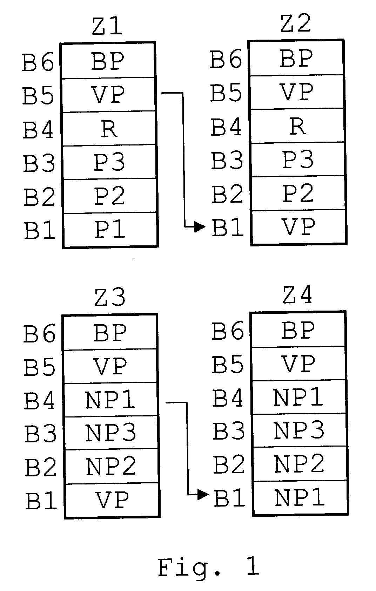

## Patentansprüche

1. Verfahren zur Übertragung von Daten in einem Telekommunikationsnetz, welche das in einem Telekommunikationsendgerät dieses Telekommunikationsnetzes ablaufende Betriebssystem zumindest teilweise umfassen, bei dem zwischen dem Telekommunikationsendgerät und einer Einrichtung dieses Telekommunikationsnetzes, welche diese Daten verwaltet, eine Verbindung aufgebaut wird und diese Daten an das Telekommunikationsendgerät übermittelt werden,
**dadurch gekennzeichnet**,
dass die Richtigkeit der Datenübertragung überprüft und die Datenübertragung im Fehlerfall wiederholt wird, und dass zwischen dem Telekommunikationsendgerät und der Datenverwaltungseinrichtung des Telekommunikationsnetzes eine neue Verbindung aufgebaut wird, sofern die erste Verbindung abgebrochen wurde.

2. Verfahren nach Anspruch 1, **dadurch gekennzeichnet**, dass die Datenübertragung periodisch wiederkehrend ausgeführt wird.

3. Verfahren nach einem der Ansprüche 1 bis 2, **dadurch gekennzeichnet**,
dass die Kontrolle der Datenübertragung mittels Bildung und Prüfung einer Prüfsumme erfolgt, die sich aus den übermittelten Daten ergibt.

4. Verfahren nach einem der Ansprüche 1 bis 3, **dadurch gekennzeichnet**, dass der Aufbau der Verbindung zwischen Telekommunikationsendgerät und Datenverwaltungseinrichtung mit Hilfe des im Telekommunikationsendgerät ablaufenden Betriebssystems gestartet wird.

5. Verfahren nach einem der Ansprüche 1 bis 4, **dadurch gekennzeichnet**, dass die Richtigkeit der Datenübertragung mit Hilfe des im Telekommunikationsendgerät ablaufenden Betriebssystems überprüft wird.

6. Verfahren nach einem der Ansprüche 1 bis 5, **dadurch gekennzeichnet**, dass nicht der gesamte Speicherbereich, der im Telekommunikationsgerät für das Betriebssystem vorgesehen ist, durch die Datenübertragung überschrieben wird.

7. Verfahren nach einem der Ansprüche 1 bis 6, **dadurch gekennzeichnet**, dass vor der Datenübertragung eine Kopie von zumindest einem Teil des Betriebssystems des Telekommunikationsendgerätes angelegt und das durch die Datenübertragung veränderte Betriebssystem nur bei die Richtigkeit der Datenübertragung aktiviert wird.

8. Verfahren nach einem der Ansprüche 1 bis 7, **dadurch gekennzeichnet**, dass die Datenverwaltungseinrichtung vom Telekommunikationsendgerät eine Rückmeldung über die Richtigkeit der Datenübertragung erwartet und im Fehlerfall die Datenübertragung nochmals startet.

9. Verfahren nach einem der Ansprüche 1 bis 8, **dadurch gekennzeichnet**, dass die Datenverwaltungseinrichtung vom Telekommunikationsendgerät eine Rückmeldung über die Richtigkeit der Datenübertragung erwartet und bei Ausbleiben dieser Meldung nach einer vorgegebenen Zeit die Datenübertragung nochmals startet.

10. Verfahren nach einem der Ansprüche 1 bis 9, **dadurch gekennzeichnet**, dass als Telekommunikationsendgerät ein ISDN-Telefon vorgesehen ist.

11. Verfahren nach einem der Ansprüche 1 bis 9, **dadurch gekennzeichnet**, dass als Telekommunikationsendgerät ein Mobiltelefon vorgesehen ist.
